# EUROPÄISCHE PATENTSCHRIFT

(11) **EP 4 147 564 B1**
(45) Veröffentlichungstag und Bekanntmachung des Hinweises auf die Patenterteilung: **28.01.2026**
(21) Anmeldenummer: 22173937.8
(22) Anmeldetag: 18.05.2022
(51) Int. Cl.: A01F 15/08

(54) **VERFAHREN ZUM BETRIEB EINER LANDWIRTSCHAFTLICHEN RUNDBALLENPRESSE**
METHOD FOR OPERATING AN AGRICULTURAL ROUND BALER
PROCÉDÉ PERMETTANT DE FAIRE FONCTIONNER UNE PRESSE AGRICOLE À BALLES RONDE

(30) Priorität: 09.09.2021 DE 102021123353
(43) Veröffentlichungstag der Anmeldung: 15.03.2023
(73) Patentinhaber: Usines CLAAS France S.A.S, 57140 St. Rémy / Woippy (FR)
(72) Erfinder: Rongvaux, Laurent, 54800 Tronville (FR); Arnould, Cyrille, 57645 Montoy-Flanville (FR)
(74) Vertreter: CLAAS Gruppe

(56) Entgegenhaltungen:
- EP-A1- 3 298 881
- EP-A2- 0 875 136
- DE-U1- 29 511 779
- US-A1- 2009 217 827

## Beschreibung

Die vorliegende Anmeldung betrifft ein Verfahren zum Betrieb einer landwirtschaftlichen Rundballenpresse gemäß dem Oberbegriff von Anspruch 1. Ferner betrifft die vorliegende Anmeldung eine landwirtschaftliche Rundballenpresse gemäß dem Oberbegriff von Anspruch 12.

Das Verfahren sieht vor, dass zu pressendes Erntegut, das insbesondere von halmartigem Erntegut wie beispielsweise Stroh oder Heu gebildet sein kann, von einem jeweiligen Untergrund aufgenommen und einer Presskammer der Rundballenpresse zugeführt wird. Letztere ist in einem Gehäuse der Rundballenpresse angeordnet. Die Presskammer ist innerhalb des Gehäuses von einem umlaufend angetriebenen, als Endlosriemen ausgeführten Pressriemen räumlich begrenzt. Innerhalb der Presskammer wird das Erntegut sukzessive zu einem Rundballen gepresst, wobei mit zunehmender Menge an zugeführtem Erntegut eine Laufstrecke des Pressriemens verändert wird. Diese Veränderung der Laufstrecke des Pressriemens geht mit einer Vergrößerung eines Durchmessers der Presskammer einher. Typischerweise ist ein Volumen der Presskammer zu Beginn eines jeweiligen Pressvorgangs minimal. Infolge der Zuführung von Erntegut in die Presskammer wird ein Druck auf den Pressriemen ausgeübt, der dazu führt, dass dieser gewissermaßen innerhalb des Gehäuses "verdrängt" wird. Das Volumen der Presskammer wächst dadurch an, wobei die Laufstrecke des Pressriemens, d.h. eine Strecke, entlang der der Pressriemen umläuft, verändert wird. Der Durchmesser der Presskammer steigt mithin bis auf ein Maximum an. Wenn dieses erreicht ist, ist der jeweilige Pressvorgang beendet und ein jeweiliger Rundballen fertiggestellt. Er kann daraufhin ausgeworfen werden, woraufhin das Volumen der Presskammer wieder auf sein anfängliches Minimum reduziert wird. Hierbei wird die Laufstrecke des Pressriemens entsprechend zurück verändert.

Im Zuge eines Pressvorgangs wird eine Spannung des Pressriemens mittels einer Riemenspanneinrichtung beeinflusst. Die Riemenspanneinrichtung umfasst einen Unterspannarm und einen Oberspannarm. Der Unterspannarm führt den Pressriemen mittels mindestens einer Spannrolle, die die Presskammer begrenzt. Typischerweise umfasst der Unterspannarm zwei Spannrollen, die in Kombination mit einer fest an dem Gehäuse der Rundballenpresse angeordneten Laufrolle den Pressriemen in einer Schlaufe führen. Hierbei verläuft die Laufstrecke auf einem Abschnitt des Pressriemens ausgehend von der ersten Spannrolle des Unterspannarms zu der festen Laufrolle und von dort zurück zu der zweiten Spannrolle des Unterspannarms, wobei vorzugsweise die beiden Spannrollen des Unterspannarms unmittelbar nebeneinander an dem Unterspannarm angeordnet sind. Der Oberspannarm wirkt mittels mindestens einer Spannrolle mit dem Pressriemen zusammen. Der Unterspannarm ist insbesondere dazu geeignet, den Pressriemen unmittelbar an der Presskammer in die Presskammer begrenzender Weise zu führen, wobei der Unterspannarm entgegen einer Spannkraft im Zuge der Förderung von Erntegut in die Presskammer gewissermaßen von dem Erntegut weggedrückt wird, sodass sich der Durchmesser der Presskammer vergrößert. Der Unterspannarm sorgt hierbei dafür, dass der Pressriemen zuverlässig einen Pressdruck auf das Erntegut ausübt. Der Oberspannarm dient typischerweise dafür, eine Veränderung einer freien Länge des Pressriemens auszugleichen, wobei eine Gesamtlänge des Pressriemens einer Summe aus der freien Länge und einer Länge des Pressriemens entlang seiner Kontaktstrecke entspricht. Umso länger die Kontaktstrecke im Zuge eines Pressvorgangs wird, desto kleiner wird die freie Länge des Pressriemens. Um den Pressriemen auf Spannung zu halten, wird dieser mittels des Oberspannarms gespannt, wobei der Oberspannarm im Zuge des Anwachsens eines Rundballens derart entgegen einer Spannkraft nachgeführt wird, dass die freie Länge des Pressriemens reduziert und gleichwohl der Pressriemen auf Spannung gehalten werden. Die Riemenspanneinrichtung kann insbesondere dazu dienen, dass die Laufstrecke des Pressriemens lediglich entgegen einer Spannkraft verändert werden kann, wodurch ein entsprechender Pressdruck mittels des Pressriemens auf das innerhalb der Presskammer befindliche Erntegut ausgeübt wird. Dieser Pressdruck führt letztlich zu der Pressung des Ernteguts zu dem gewünschten Rundballen.

Verfahren sowie zugehörige Rundballenpressen der vorstehend beschriebenen Art sind im Stand der Technik bereits bekannt. Hierzu wird insbesondere auf die europäische Patentanmeldung EP 3 298 881 A1 hingewiesen. Diese beschreibt eine gattungsgemäße Rundballenpresse, die eine Steuereinrichtung aufweist. Diese ist dazu geeignet, einen Pressdruck des Pressriemens derart zu steuern, dass dieser sich im Zuge eines Pressvorgangs verändert. Hierzu wird vorgeschlagen, dass der Pressdruck gemäß einer Steuerfunktion verändert wird, die auf eine Größe der Presskammer und einer wirksamen Länge des Pressriemens basiert.

Die bekannte Vorgehensweise hat den Nachteil, dass die Steuerfunktion von vorgegebenen Parametern abhängt, die "ideale" Bedingungen repräsentieren. Somit basiert die Steuerfunktion beispielsweise auf einer vorgegebenen Länge des Pressriemens, die jedoch im Einzelfall aufgrund von Toleranzen bei der Produktion eines solchen Pressriemens von einem vorgegebenen Wert abweichend ausfallen kann. Andere Parameter, die beispielsweise das Erntegut selbst betreffen können, tragen ebenfalls dazu bei, dass die Veränderung des Pressdrucks im Zuge eines jeweiligen Pressvorgangs nicht in solcher Weise vorgenommen wird, dass ein optimales Pressergebnis erzielt wird.

Der vorliegenden Anmeldung liegt mithin die Aufgabe zugrunde, ein Verfahren zum Betrieb einer Rundballenpresse sowie eine zugehörige Rundballenpresse bereitzustellen, mittels dessen die Pressung von Rundballen optimiert wird.

Die zugrunde liegende Aufgabe wird erfindungsgemäß mittels eines Verfahrens mit den Merkmalen des Anspruchs 1 gelöst. Vorteilhafter Ausgestaltungen ergeben sich aus den zugehörigen Unteransprüchen.

Das erfindungsgemäße Verfahren ist dadurch gekennzeichnet, dass mittels mindestens einer Messeinrichtung eine Ist-Spannung des Pressriemens während eines jeweiligen Pressvorgangs fortwährend bestimmt und mit einer Soll-Spannung verglichen wird. Unter einer "fortwährenden Bestimmung " wird im Sinne der vorliegenden Anmeldung eine Bestimmung der Ist-Spannung zu einer Vielzahl diskreter Zeitpunkte verstanden, die typischerweise äquidistant über die Dauer eines jeweiligen Pressvorgangs verteilt sind. Insbesondere ist eine Bestimmung der Ist-Spannung mit einer Frequenz von mindestens 50 Hz, vorzugsweise mindestens 100 Hz, weiter vorzugsweise mindestens 200 Hz, vorteilhaft. Erfindungsgemäß wird die Riemenspanneinrichtung derart betrieben, dass die Ist-Spannung des Pressriemens in Richtung der Soll-Spannung verändert wird.

Die Messeinrichtung ist vorzugsweise derart ausgebildet, dass sie mindestens ein Messmittel sowie mindestens eine Verarbeitungseinheit zur rechnerische Verarbeitung von Informationen aufweist, die mittels des Messmittels erfasst werden. Insbesondere kann das Messmittel von einem Kraftsensor gebildet sein, der eine Lagerkraft einer Laufrolle erfasst, mit der die Laufrolle an einem Gehäuse der Rundballenpresse gelagert ist. Die Verarbeitungseinheit ist dazu geeignet, diese Information rechnerisch zu verarbeiten und auf diese Weise die Ist-Spannung des Pressriemens zu bestimmen. Messmittel und Verarbeitungseinheit sind hierzu in Daten übertragender Weise verbunden, vorzugsweise kabellos oder kabelgebunden.

Die Soll-Spannung kann sich insbesondere anhand einer Vorgabe ergeben, wobei beispielsweise vergleichbar zum Stand der Technik die Soll-Spannung über einen Pressvorgang hinweg verändert werden kann. Sie könnte mithin beispielsweise ausgehend von einem anfänglichen Minimum im Zuge eines Anwachsens des Durchmessers der Presskammer hin zu einem Maximum verändert werden, das bei der Fertigstellung eines jeweiligen Rundballens erreicht wird. Die Veränderung der Soll-Spannung kann sowohl linear als auch nicht-linear über den Zeitraum eines Pressvorgangs hinweg erfolgen. Zudem kann die Soll-Spannung in Abhängigkeit von Betriebsparametern der Rundballenpresse verändert werden, beispielsweise in Abhängigkeit eines Durchmessers der Presskammer und/oder einer Kontaktstrecke des Pressriemens. Letztere beschreibt eine Strecke, über die hinweg der Pressriemen entlang seiner Längsachse zu einem jeweiligen Zeitpunkt mit dem in der Presskammer befindlichen Erntegut steht. Die Soll-Spannung kann auch durchgehend konstant sein.

Das erfindungsgemäße Verfahren hat viele Vorteile. Insbesondere wird mittels der Bestimmung der Ist-Spannung erreicht, dass praktisch zu jedem Zeitpunkt während eines Pressvorgangs der tatsächliche Pressdruck, der mittels des Pressriemens auf das Erntegut bzw. den im Entstehen begriffenen Rundballen ausgeübt wird, bekannt ist. Der Stand der Technik sieht lediglich eine Veränderung des Pressdrucks in Abhängigkeit von Betriebsparametern der Rundballenpresse vor, ist jedoch in Unkenntnis über die tatsächlichen Spannungsverhältnisse, die auf den im Entstehen begriffenen Rundballen einwirken. Zwar ist die Soll-Spannung, die der Stand der Technik vorgibt, um den Pressdruck während eines Pressvorgangs zu verändern, als solcher vorteilhaft, um einen qualitativ hochwertigen Rundballen zu pressen. Wie jedoch eingangs beschrieben, ist die Veränderung der Soll Spannung im Stand der Technik unabhängig von tatsächlichen Gegebenheiten der jeweiligen Rundballenpresse und/oder äußerer Erntebedingungen. Die erfindungsgemäße Bestimmung der Ist-Spannung gibt hingegen Aufschluss über die tatsächlichen Spannungsverhältnisse, die auf den Rundballen bzw. das Erntegut einwirken, sodass die Soll-Spannung, die ein Ideal für einen hochqualitativen Rundballen darstellt, tatsächlich angestrebt und vorteilhafterweise auch erreicht werden kann. Der Vergleich von Ist- und Soll-Spannung sowie die direkte oder indirekte Veränderung der Ist-Spannung in Richtung der Soll-Spannung, vorzugsweise auf die Soll-Spannung, stellt einen Regelkreis dar, mit dem die Spannung des Pressriemens geregelt wird. Das Erntegut wird auf diese Weise zumindest im Wesentlichen durchgängig mit einem Pressdruck gepresst, der tatsächlich gewollt ist. Mittels des erfindungsgemäßen Verfahrens ist demzufolge eine hohe Qualität bei der Herstellung von Rundballen erreichbar.

In einer vorteilhaften Ausgestaltung des erfindungsgemäßen Verfahrens ist die Soll-Spannung eine Funktion des Durchmessers der Presskammer und/oder einer Kontaktstrecke des Pressriemens. Mithin gilt: T_{Soll} = f(D_{PK}, K_{P}), wobei T_{Soll} die Soll-Spannung des Pressriemens, D_{PK} den Durchmesser der Presskammer und K_{P} die Kontaktstrecke des Pressriemens beschreiben.

Weiterhin kann es besonders vorteilhaft sein, wenn der Unterspannarm und/oder der Oberspannarm jeweils im Zuge eines Pressvorgangs grundsätzlich gemäß einer gemeinsamen vorgegebenen Bewegungsfunktion oder jeweils eigener vorgegebener Bewegungsfunktionen relativ zu dem Gehäuse bewegt werden. Die Bewegung des Unterspannarms und des Oberspannarms kann insbesondere davon abhängen, auf welche Weise im Zuge eines Pressvorgangs die Soll-Spannung des Pressriemens verändert werden soll.

Sofern die Bewegung der Spannarme gemäß vorstehender Beschreibung gemäß einer oder mehrerer vorgegebener Bewegungsfunktionen vorgenommen wird, kann es weiterhin besonders vorteilhaft sein, wenn der Oberspannarm abweichend von der ihm zugeordneten Bewegungsfunktion positioniert wird, und zwar derart, dass die Ist-Spannung des Pressriemens in Richtung der Soll-Spannung verändert wird. Das "Positionieren" kann hierbei eine Bewegung des Oberspannarms oder ein Stillstehen bzw. Festhalten des Oberspannarms beinhalten. Wie vorstehend dargelegt, kann die vorgegebene Bewegungsfunktion des Oberspannarms grundsätzlich dazu dienen, den Pressriemen auf der vorgegebenen Soll-Spannung zu halten bzw. zu führen. Da jedoch die Ist-Spannung sich anders entwickeln kann als dies infolge der Bewegung des Oberspannarms gemäß der vorgegebenen Bewegungsfunktion geplant ist, kann der Oberspannarm hiervon abweichend bewegt werden, wodurch die Ist-Spannung verändert wird. Diese Veränderung erfolgt derart, dass die Ist-Spannung in Richtung der Soll-Spannung verändert wird.

Falls die Ist-Spannung kleiner ist als die Soll-Spannung ist es besonders vorteilhaft, wenn der Oberspannarm zumindest für eine Spannungszeitraum in seiner aktuellen Position gehalten wird. Während dieses Spannungszeitraums, der beispielsweise zwischen zwei Messzeitpunkten, zu denen mittels der Messeinrichtung die Ist-Spannung des Pressriemens bestimmt wird, liegen kann, wird zusätzliches Erntegut in die Presskammer gefördert, wodurch der Durchmesser der Presskammer ansteigt und die Kontaktstrecke des Pressriemens zunimmt. Die freie Länge des Pressriemens nimmt entsprechend ab, was dazu führt, dass eigentlich der Oberspannarm nachgeführt werden müsste, um einen Teil der freien Länge freizugeben. Hierdurch würde die aktuelle Ist-Spannung zumindest im Wesentlichen beibehalten werden. Da letztere jedoch in diesem Szenario kleiner ist als die Soll-Spannung, wird der Oberspannarm in seiner Position gehalten und gibt mithin nicht den Pressriemen frei. Dies führt dazu, dass die Ist-Spannung des Pressriemens ansteigt und sich in Richtung der Soll-Spannung verändert.

Für den Fall, dass die Ist-Spannung gleich oder größer ist als die Soll-Spannung, wird der Oberspannarm zumindest für einen Freigabezeitraum freigegeben oder für ein Zeitinkrement in seiner aktuellen Position gehalten. Unter der "Freigabe" des Oberspannarms ist zu verstehen, dass der Oberspannarm sich entsprechend einer Vorgabe bewegen kann. Für den Fall, dass die Ist-Spannung größer ist als die Soll-Spannung, kann der Oberspannarm insbesondere stärker nachgeführt werden als es die vorgegebene Bewegungsfunktion vorsieht, sodass Spannung von dem Pressriemen genommen und folglich die Ist-Spannung des Pressriemens gemindert werden. Das Halten der Position des Oberspannarms kommt insbesondere dann infrage, wenn ein Schwenkwinkel des Oberspannarms gegenüber dem Gehäuse kleiner ist als ein theoretischer Schwenkwinkel, der vorgegeben ist. Der theoretische Schwenkwinkel kann insbesondere Teil der vorgegebenen Bewegungsfunktion des Oberspannarms sein und beschreibt einen Winkel, um den der Oberspannarm um seine Schwenkachse bezogen auf eine Referenz relativ zu dem Gehäuse verschwenkt ist. Wenn festgestellt wird, dass die Ist-Spannung zwar gleich oder größer ist als die Soll-Spannung, der tatsächliche Schwenkwinkel des Oberspannarms jedoch gleichwohl kleiner ist als der theoretische Schwenkwinkel, der vorgegeben ist, wird der Oberspannarm für ein Zeitinkrement, insbesondere bis zur nächsten Erhebung, festgehalten, sodass der tatsächliche Schwenkwinkel sich effektiv dem theoretischen Schwenkwinkel annähert, da der theoretische Schwenkwinkel im Zuge eines Pressvorgangs sukzessive abnimmt. Bei dieser Betrachtung ist der Schwenkwinkel des Oberspannarms zu Beginn eines Pressvorgangs maximal und nimmt zum Ende des Pressvorgangs hin sukzessive ab. Wen der tatsächliche Schwenkwinkel gleich oder größer als der theoretische Schwenkwinkel ist, wird der Oberspannarm freigegeben.

In einer besonders vorteilhaften Ausgestaltung des erfindungsgemäßen Verfahrens wird die Ist-Spannung des Pressriemens unter Zuhilfenahme einer dem Gehäuse gelagerten Laufrolle bestimmt, die mit dem Pressriemen zusammenwirkt. Bei dieser Laufrolle kann es sich insbesondere um die Laufrolle handeln, die mit zwei Laufrollen des Unterspannarms gemeinsam den Pressriemen in einer Schlaufe führt. Zur Bestimmung der Ist-Spannung wird vorzugsweise mittels der Messeinrichtung eine Lagerkraft der Laufrolle erfasst, die infolge der Lagerung des Pressriemens an der Laufrolle wirkt. Anhand der Lagerkraft, die an der Laufrolle wirkt, kann mittels der Messeinrichtung eine in dem Pressriemen wirkende Riemenkraft ermittelt werden, anhand der sich wiederum in Kenntnis eines Querschnitts des Pressriemens die aktuell wirkende Ist-Spannung bestimmen lässt. Hierzu ist es besonders vorteilhaft, wenn eine resultierende Lagerkraft bestimmt wird, mit der die Laufrolle effektiv an dem Gehäuse gelagert ist. Dies kann insbesondere dadurch erfolgen, dass eine mittels eines Messmittels in eine vorgegebene Messrichtung an der Laufrolle erfasste Lagerkraft in Abhängigkeit einer Auslenkung des Unterspannarms und eine sich daraus ergebenden Umgreifungswinkels, um den der Pressriemen die Laufrolle umgreift, mittels der Messeinrichtung, insbesondere einer Verarbeitungseinheit derselben, in die resultierende Lagerkraft umgerechnet wird. Letztere entspricht zumindest im Wesentlichen der Riemenkraft, anhand der sich mittels Division durch eine Querschnittsfläche des Pressriemens schließlich die Ist-Spannung ergibt. Diese Rechenoperationen können insbesondere mittels der Messeinrichtung, vorzugweise mittels einer Verarbeitungseinheit der Messeinrichtung, erfolgen.

Die zugrunde liegende Aufgabe wird ferner vorrichtungstechnisch mittels einer landwirtschaftlichen Rundballenpresse mit den Merkmalen des Anspruchs 12 gelöst. Vorteilhafte Ausgestaltungen ergeben sich aus den zugehörigen Unteransprüchen.

Die erfindungsgemäße Rundballenpresse ist durch eine Messeinrichtung sowie eine Steuereinrichtung gekennzeichnet. Die Messeinrichtung ist dazu eingerichtet, eine Ist-Spannung des Pressriemens während eines jeweiligen Pressvorgangs fortwährend zu bestimmen. Die Steuereinrichtung ist dazu eingerichtet, die Riemenspanneinrichtung in Abhängigkeit der bestimmten Ist-Spannung derart anzusteuern, dass diese Ist-Spannung in Richtung einer vorgegebenen Soll-Spannung des Pressriemens verändert wird.

Die sich durch eine Verwendung einer erfindungsgemäßen Rundballenpresse ergebenden Vorteile sind vorstehend bereits im Zusammenhang mit dem erfindungsgemäßen Verfahren beschrieben. Insbesondere ist es möglich, die Spannung des Pressriemens derart zu beeinflussen, dass diese möglichst der Soll-Spannung des Pressriemens entspricht. Hiermit ergibt sich ein Regelkreis, mit dem die Ist-Spannung des Pressriemens regelbar ist.

Die Riemenspanneinrichtung umfasst einen Unterspannarm sowie einen Oberspannarm. Hierbei umfasst der Unterspannarm vorzugsweise zwei Spannrollen und der Oberspannarm eine Spannrolle. Mittels einer solchen Ausgestaltung der Riemenspanneinrichtung kann eine Laufstrecke des Pressriemens im Zuge eines Pressvorgangs besonders einfach verlagert und gleichzeitig der Pressriemen auf Spannung gehalten werden. Die Rundballenpresse lässt sich mithin bei dieser Ausgestaltung besonders bedarfsgerecht betreiben.

Vorteilhafterweise wirkt die Messeinrichtung mit einer Laufrolle zusammen, die fest an einem Gehäuse der Rundballenpresse angeordnet ist, wobei die Laufrolle mit dem Pressriemen zusammenwirkt. Mit anderen Worten wird der Pressriemen mittels der Laufrolle geführt und an selbiger umgelenkt, wodurch an der Laufrolle infolge der in dem Pressriemen wirkenden Spannung eine Lagerkraft auftritt, die von der Laufrolle in das Gehäuse abgeleitet wird. Vorteilhafterweise ist letztere mittels der Messeinrichtung, insbesondere mittels eines Messmittels derselben, erfassbar. Bei einem solchen Messmittel kann es sich beispielsweise um eine Kraftmessdose handeln.

Weiterhin kann eine solche Rundballenpresse von Vorteil sein, bei der der Unterspannarm mit einem Spannelement zusammenwirkt, mittels dessen die mindestens eine Spannrolle des Unterspannarms gegen den Pressriemen spannbar ist. Dieses Spannelement ist vorzugsweise von einem Hydraulikzylinder gebildet. Die hat den besonderen Vorteil, dass das Spannelement sowohl passiv als auch aktiv wirken kann. Insbesondere ist eine Kraft, die mittels des Spannelement auf den Unterspannarm ausgeübt wird, vorzugsweise frei veränderbar, wodurch die Soll-Spannung des Pressriemens veränderbar ist. Somit ist es gemäß vorstehender Erläuterung insbesondere vorstellbar, dass die Soll-Spannung des Pressriemens im Zuge eines Pressvorgangs verändert wird. Dies ist mittels eines beschriebenen Spannelements besonders einfach möglich.

Ebenso kann es besonders von Vorteil sein, wenn der Oberspannarm mit einem Spannelement zusammenwirkt, mittels dessen die Spannrolle des Oberspannarms mittelbar oder unmittelbar gegen den Pressriemen spannbar ist. Vorzugsweise ist das Spannelement von einem Hydraulikzylinder gebildet. Die sich hierdurch ergebenden Vorteile sind vorstehend bereits im Zusammenhang mit dem Unterspannarm beschrieben.

In besonders vorteilhafte Ausgestaltung ist das Spannelement, das mit dem Oberspannarm zusammenwirkt, an seinem einen Ende in Kraft übertragender Weise mit dem Oberspannarm und mit seinem anderen Ende in Kraft übertragender Weise mit dem Unterspannarm gekoppelt. Dies hat den besonderen Vorteil, dass eine Bewegung des Unterspannarms infolge eines Anwachsens des Durchmessers der Presskammer im Zuge der Erzeugung eines Rundballens automatisch eine Bewegung des Oberspannarms bewirken kann. Mit anderen Worten werden der Oberspannarm und der Unterspannarm mittels des Spannelements kinematisch gekoppelt, sodass die Bewegungen des Oberspannarms und des Unterspannarms voneinander abhängen. In Anbetracht des Umstands, dass eine Veränderung des Durchmessers der Presskammer gleichbedeutend ist mit einer Veränderung der Kontaktstrecke des Pressriemens sowie umgekehrt der freien Länge des Pressriemens, kann eine solche kinematische Kopplung besonders vorteilhaft sein, um die Spannung des Pressriemens zu beeinflussen.

Die Erfindung ist nachstehend anhand eines Ausführungsbeispiels, das in den Figuren dargestellt ist, näher erläutert. Es zeigt:
- Fig. 1:: Einen Querschnitt durch eine erfindungsgemäße Rundballenpresse,
- Fig. 2:: Eine schematische Darstellung einer Laufstrecke eines Pressriemens der Rundballenpresse gemäß Figur 1,
- Fig. 3:: Ein Detail einer an einem Gehäuse der Rundballenpresse gelagerten Laufrolle, die mit dem Pressriemen zusammenwirkt, und
- Fig. 4:: Ein Flussdiagramm einer Regelung der Rundballenpresse gemäß Figur 1.

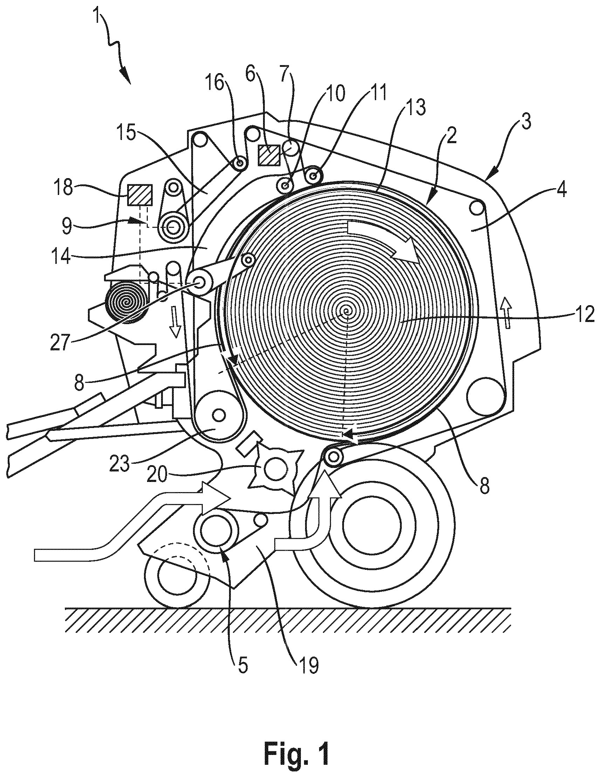

Ein Ausführungsbeispiel, das den **Figuren 1 bis 4** dargestellt ist, umfasst eine Rundballenpresse **1,** mittels der Rundballen **2** herstellbar sind. Die Rundballenpresse **1** umfasst ein Gehäuse **3,** das einen Innenraum **4** der Rundballenpresse **1** räumlich begrenzt. Die Rundballenpresse **1** umfasst eine Zuführeinrichtung **5,** mittels der Erntegut, das auf einem Untergrund aufliegt, einer Presskammer **12** zugeführt werden kann. Vor der Presskammer **12** weist die Rundballenpresse **1** ferner eine Schneideinrichtung **20** auf, mittels der das Erntegut schneidbar ist. Auf diese Weise werden insbesondere Ernteguthalme, von denen das Erntegut hauptsächlich gebildet ist, zerschnitten, sodass diese eine reduzierte Länge aufweisen. Innerhalb der Presskammer **12** wird ein jeweiliger Rundballen **2** gepresst.

Die Rundballenpresse **1** weist eine Presskammer **12** mit variablem Durchmesser auf, wobei der Durchmesser der Presskammer **12** maßgeblich von einer Laufstrecke eines Pressriemens **8** bestimmt ist, der in dem Innenraum **4** der Rundballenpresse **1** umläuft. Bei dem Pressriemen **8** handelt es sich um einen endlosen Riemen, der mit einer Mehrzahl von Laufrollen **7** zusammenwirkt und mittels einer Riemenspanneinrichtung **9** auf Spannung gehalten wird, sodass er Presskräfte auf das in die Presskammer **12** geförderte Erntegut ausüben kann. Der Pressriemen **8** wird zumindest während eines jeweiligen Pressvorgangs fortwährend umlaufend angetrieben, wobei die Rundballenpresse **1** in dem gezeigten Beispiel über eine Antriebsrolle **23** verfügt, die den Antrieb des Pressriemens **8** bewerkstelligt. Das Volumen der Presskammer **12** steigt im Zuge der Herstellung eines Rundballens **2** sukzessive an, desto mehr Erntegut in die Presskammer **12** gefördert wird. Mithin verändert sich die Laufstrecke des Pressriemens **8** innerhalb des Innenraums **4,** was mit einer entsprechenden Vergrößerung des Volumens der Presskammer **12** bzw. einer Vergrößerung von deren Durchmesser einhergeht.

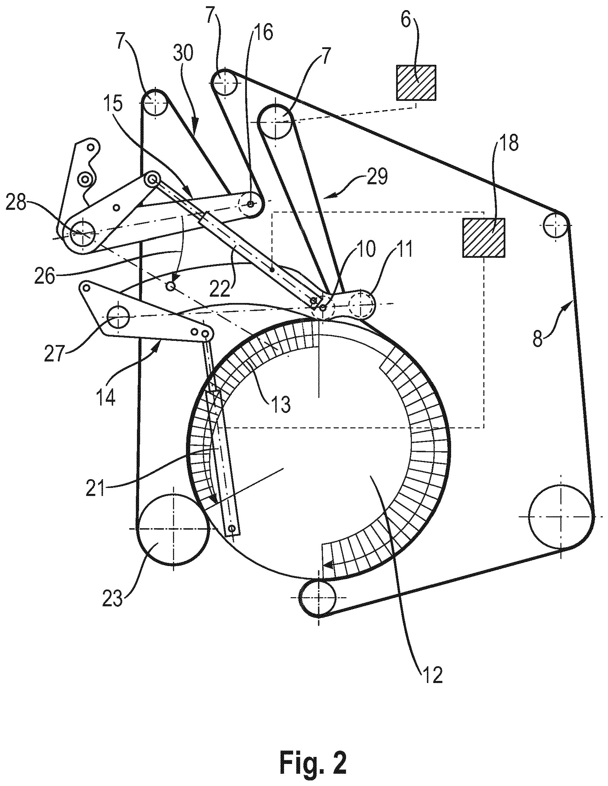

Der Pressriemen **8** befindet sich während eines Pressvorgangs durchgehend mit einer Kontaktstrecke **13** in unmittelbaren Kontakt mit dem Erntegut. Diese Kontaktstrecke **13** ist von einem Teilumfang der Presskammer **12** gebildet, wie sich insbesondere anhand der **Figuren 1** **und** **2** ergibt. Umso größer der Durchmesser der Presskammer **12** ist, desto länger ist die Kontaktstrecke **13,** über die hinweg der Pressriemen **8** in unmittelbaren Kontakt mit dem Erntegut steht. Entlang dieser Kontaktstrecke **13** ist der Pressriemen **8** dazu geeignet, Presskräfte auf das Erntegut auszuüben und auf diese Weise eine Verdichtung des Ernteguts zu bewirken. Um den Pressriemen **8** auf Spannung zu halten, verfügt die Rundballenpresse **1** über die beschriebene Riemenspanneinrichtung **9.** Diese umfasst in dem gezeigten Beispiel einen Unterspannarm **14** sowie einen Oberspannarm **15.** Der Unterspannarm **14** ist unmittelbar für die Führung des Pressriemens **8** im Bereich der Presskammer **12** verantwortlich. Hierzu verfügt der Unterspannarm **14** über zwei Spannrollen **10, 11,** die gemeinsam mit einer fest an dem Gehäuse **3** gelagerten Laufrolle **7** den Pressriemen **8** in einer Schlaufe **29** führen. Der Unterspannarm **14** ist um eine Schwenkachse **27** verschwenkbar an dem Gehäuse **3** gelagert, wobei der Unterspannarm **14** mit zunehmendem Volumen der Presskammer **12** sukzessive nach oben verschwenkt wird. Diese Verschwenkung des Unterspannarms **14** erfolgt entgegen einer Spannkraft eines Spannelements **21,** das mit dem Unterspannarm **14** zusammenwirkt. Dies ergibt sich besonders gut anhand von **Figur 2****.** Das Spannelement **21** führt mithin dazu, dass der Unterspannarm **14** nur dann um seine Schwenkachse **27** relativ zu dem Gehäuse **3** verdreht wird, wenn die an dem Pressriemen **8** über die Kontaktstrecke **13** anliegende Spannung, die von dem Erntegut auf den Pressriemen **8** ausgeübt wird, in Summe über die Fläche des Pressriemens **8** die vorgegebene Spannkraft des Spannelement **21** übersteigt. Auf diese Weise wird umgekehrt sichergestellt, dass die mittels des Pressriemens **8** umgekehrt auf das Erntegut abgegebene Presskraft einen bestimmten Wert annimmt, der eine gewünschte Pressung des Ernteguts **2** bewirkt.

Anhand eines Vergleichs der Zustände eines Pressvorgangs, die in den **Figuren 1** **und** **2** veranschaulicht sind, versteht es sich, dass die Schlaufe **29,** in der der Pressriemen **8** zwischen den beiden Spannrollen **10, 11** des Unterspannarms **14** und der an dem Gehäuse **3** fest gelagerten Laufrolle **7** geführt ist, mit zunehmendem Durchmesser der Presskammer **12** kleiner wird. Mit anderen Worten werden die Spannrollen **10, 11** des Unterspannarms **14** mit zunehmendem Volumen der Presskammer **12** sukzessive näher an die Laufrolle **7** geführt. Derweil steigen der Umfang der Presskammer **12** sowie die Länge der Kontaktstrecke **13** des Pressriemens **8** an. Dies führt dazu, dass von einer Gesamtlänge des Pressriemens **8** ein zunehmend großer Anteil im Bereich der Presskammer **12** vorliegt, wodurch eine Längenreserve des Pressriemens **8** sukzessive verbraucht wird. Besagte Längenreserve wird mittels des Oberspannarms **15** vorgehalten und gespannt, wobei der Oberspannarm **15** über eine Spannrolle **16** verfügt, die den Pressriemen **8** gemeinsam mit zwei feststehenden Laufrollen **7** in einer Schlaufe **30** führt. Besagte Schlaufe **30** wird mit zunehmendem Durchmesser der Presskammer **12** sukzessive kleiner. Der Oberspannarm **15** wirkt gleichermaßen mit einem Spannelement **22** zusammen, mittels dessen der Oberspannarm **15** mit dessen Spannrolle **16** gegen den Pressriemen **8** gespannt ist. Eine Nachführung des Oberspannarms **15** erfolgt vergleichbar zum Unterspannarm **14** mittels einer Verschwenkung des Oberspannarms **15** um eine Schwenkachse **28.**

Die Besonderheit der erfindungsgemäßen Rundballenpresse **1** besteht darin, dass über einen Pressvorgang hinweg eine tatsächlich vorliegende Ist-Spannung des Pressriemens **8** fortlaufend bestimmt wird, sodass diese mit einer vorgegebenen Soll-Spannung vergleichbar ist. Sofern eine Abweichung der Ist-Spannung mit der Soll-Spannung festgestellt wird, erfolgt ein Eingriff, die eine Veränderung der Ist-Spannung in Richtung der Soll-Spannung bewirkt. Auf diese Weise umfasst die Rundballenpresse **1** einen Regelkreis, mittels dessen die Ist-Spannung des Pressriemens **8** regelbar ist.

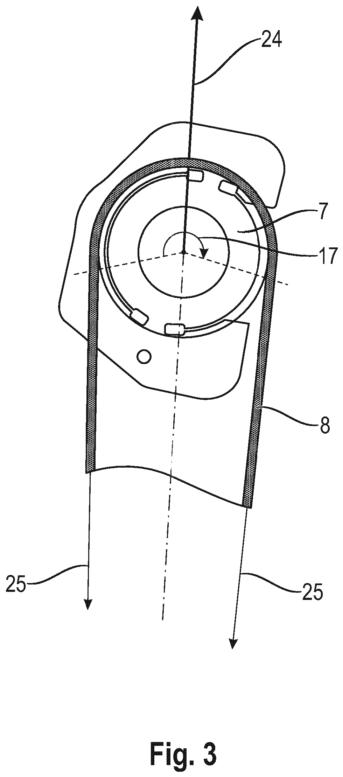

Die Soll-Spannung ist hierbei über einen Pressvorgang typischerweise nicht konstant, sondern veränderlich, typischerweise nichtlinear. Die Bestimmung der Ist-Spannung erfolgt bei der gezeigten Rundballenpresse **1** mittels einer Messeinrichtung **6,** die mit der Laufrolle **7** zusammenwirkt, an der gemeinsam mit den Spannrollen **10, 11** des Unterspannarms **14** der Pressriemen **8** in der Schlaufe **29** geführt ist. An der Laufrolle **7** werden Umlenkkräfte des Pressriemens **8** in das Gehäuse **3** der Rundballenpresse **1** abgetragen. In Abhängigkeit von einer Riemenkraft **25** des Pressriemens **8** sowie eines Umgreifungswinkels **17,** um den der Pressriemen **8** insgesamt die Laufrolle **7** umgreift (siehe **Figur 3****)** verändert sich eine Lagerkraft, mit der die Laufrolle **7** in dem Gehäuse **3** gelagert ist. Mittels der Erfassung dieser Lagerkraft, die hier mittels eines nicht dargestellten Messmittels der Messeinrichtung **6** erfolgt, kann in Kenntnis der weiteren Parameter des Pressriemens **8,** insbesondere dessen Querschnittsfläche, auf die Ist-Spannung des Pressriemens **8** geschlossen werden. Die Verarbeitung der mittels des Messmittels erfassten Lagerkraft in rechnerischer Weise hin zu der Ist-Spannung erfolgt mittels einer gleichermaßen nicht dargestellten Verarbeitungseinheit der Messeinrichtung **6,** die entsprechend eingerichtet ist. Hierbei ist zu beachten, dass eine Resultierende **24,** die an der Laufrolle **7** wirkt, von dem Umgreifungswinkel **17** abhängig und der Umgreifungswinkel **17** über einen Pressvorgang hinweg nicht konstant sind. Mithin ist eine Veränderung der Lagerkraft der Laufrolle **7** nicht nur auf eine Veränderung der Ist-Spannung des Pressriemens **8,** sondern auch auf eine Veränderung des Umgreifungswinkels **17** zurückzuführen. Dies kann rechnerisch berücksichtigt werden, insbesondere in Abhängigkeit eines Schwenkwinkels des Unterspannarms **14,** der in unmittelbarem Zusammenhang mit dem Umgreifungswinkel **17** steht.

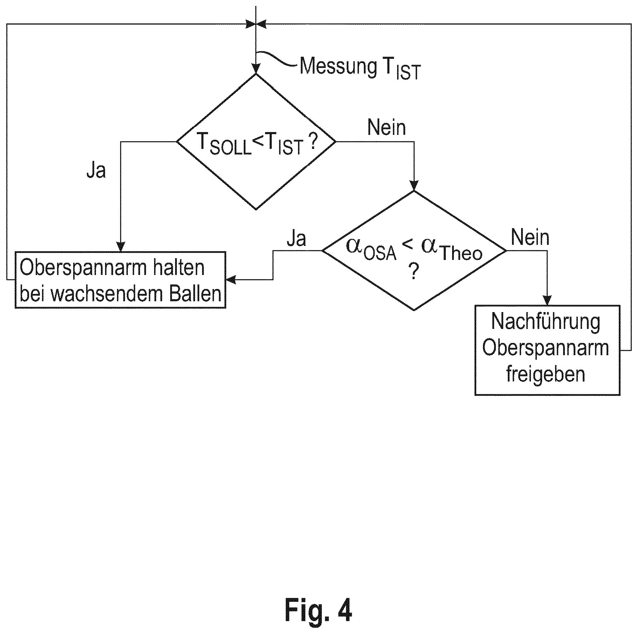

Der Regelkreis zur Regelung der Ist-Spannung des Pressriemens **8** ergibt sich besonders gut anhand des Flussdiagramms gemäß **Figur 4****.** Somit wird nach erfolgter Bestimmung der Ist-Spannung T_{Ist} geprüft, ob besagte Spannung T_{Ist} kleiner ist als die vorgegebene Soll-Spannung T_{Soll}. Sofern dies der Fall ist, wird eine Anhebung der Ist-Spannung angestrebt. Dies wird in dem gezeigten Ausführungsbeispiel dadurch vorgenommen, dass während des laufenden Pressvorgangs der Oberspannarm **15** nicht wie ansonsten im Zuge eines Pressvorgangs gemäß obiger Beschreibung vorgesehen nachgeführt, d.h. um seine Schwenkachse **28** sukzessive weiter nach oben verschwenkt, wird, sondern zumindest für einen Spannungszeitraum in seiner aktuellen Position gehalten wird. Bei gleichzeitig wachsendem Rundballen **2** führt dies dazu, dass der Pressriemen **8** gespannt wird, da die Nachführung des Oberspannarms **15** ausbleibt. Das Halten des Oberspannarms **15** kann beispielsweise für die Dauer des Spannungszeitraums vorgenommen werden, in dessen Anschluss abermals die Ist-Spannung des Pressriemens **8** bestimmt und mit der Soll-Spannung verglichen wird. Sofern die Ist-Spannung weiterhin kleiner ist als die Soll-Spannung, kann der Oberspannarm **15** abermals für einen Spannungszeitraum in seiner aktuellen Position gehalten werden.

Für den Fall, dass die Ist-Spannung gleich oder größer als die Soll-Spannung ist, wird in dem gezeigten Beispiel eine weitere Abfrage vorgenommen. Diese vergleicht einen Schwenkwinkel **26** des Oberspannarms **15** (α_{OSA}) mit einem theoretischen Schwenkwinkel des Oberspannarms **15.** Letzterer stammt aus einer Steuerfunktion, die in dem gezeigten Beispiel auf einer Steuereinrichtung **18** hinterlegt ist. Hierüber ist vorgesehen, dass die Soll-Spannung über einen Pressvorgang eines Rundballens **2** hinweg sukzessive verändert wird. Die Steuerfunktion kann insbesondere einen Pressdruck, mit dem der Pressriemen **8** auf das in der Presskammer **12** befindliche Erntegut einwirkt, mit einem Volumen und/oder einem Durchmesser der Presskammer **12** und/oder einer wirksamen Länge des Pressriemens **8** in Beziehung setzen. Da jedoch herstellungsbedingt Toleranzen beispielsweise bei der Gesamtlänge des Pressriemens **8** bestehen können, ist die Steuerung des Pressdrucks allein basierend auf der jeweiligen Vorgabe nicht gleichbedeutend damit, dass der gewünschte Pressdruck tatsächlich auf das Erntegut ausgeübt wird.

Um dies sicherzustellen, ist der beschriebene Regelkreis implementiert. Die Steuereinrichtung **18** sieht basierend auf der Steuerfunktion einen theoretischen Schwenkwinkel des Oberspannarms **15** in Abhängigkeit mindestens eines weiteren Parameters, beispielsweise des Pressdrucks oder des Durchmessers der Presskammer **12,** vor. Sollte der gemessene Schwenkwinkel **26** des Oberspannarms **15** kleiner sein als der theoretische Schwenkwinkel des Oberspannarms **15,** wird der Oberspannarm **15** zumindest für ein Zeitinkrement in seiner aktuellen Position gehalten, während die Presskammer **12** weiterhin mit Erntegut befüllt wird und in ihrem Durchmesser anwächst. Sofern der gemessene Schwenkwinkel **26** des Oberspannarms **15** dem theoretischen Schwenkwinkel entspricht oder größer als dieser ist, wird die Nachführung des Oberspannarms **15** freigegeben. In dieser Situation wird der Oberspannarm **15** in der Weise nachgeführt, wie es von der Steuereinrichtung **18** vorgesehen ist.

Die Überprüfung der Ist-Spannung wird während eines jeweiligen Pressvorgangs wiederholt vorgenommen, beispielsweise mit einer Frequenz von 100 Hz.

Die Spannelemente **21, 22,** die mit dem Unterspannarm **14** und dem Oberspannarm **15** zusammenwirken, sind in dem gezeigten Beispiel jeweils von einem Hydraulikzylinder gebildet. Hierbei ist das dem Oberspannarm **15** zugeordnete Spannelement **22** mit seinem einem Ende in Kraft übertragender Weise mit dem Oberspannarm **15** und mit seinem anderen Ende in Kraft übertragender Weise mit dem Unterspannarm **14** gekoppelt. Auf diese Weise findet eine Bewegung des Oberspannarms **15** kinematisch gekoppelt an eine Bewegung des Unterspannarms **14** statt. Dies ist für die Steuerung der Bewegung des Oberspannarms **14** vorteilhaft.

### Bezugszeichenliste

- 1: Rundballenpresse
- 2: Rundballen
- 3: Gehäuse
- 4: Innenraum
- 5: Zuführeinrichtung
- 6: Messeinrichtung
- 7: Führungsrolle
- 8: Pressriemen
- 9: Riemenspanneinrichtung
- 10: Spannrolle
- 11: Spannrolle
- 12: Presskammer
- 13: Kontaktstrecke
- 14: Unterspannarm
- 15: Oberspannarm
- 16: Spannrolle
- 17: Umgreifungswinkel
- 18: Steuereinrichtung
- 19: Zuführkanal
- 20: Schneideinrichtung
- 21: Spannelement
- 22: Spannelement
- 23: Antriebsrolle
- 24: Resultierende
- 25: Riemenkraft
- 26: Schwenkwinkel Oberspannarm (α_{OSA})
- 27: Schwenkachse
- 28: Schwenkachse
- 29: Schlaufe
- 30: Schlaufe

## Patentansprüche

1. Verfahren zum Betrieb einer landwirtschaftlichen Rundballenpresse (1), umfassend die folgenden Verfahrensschritte:
a) Zu pressendes Erntegut wird von einem Untergrund aufgenommen und einer in einem Gehäuse (3) der Rundballenpresse (1) angeordneten Presskammer (12) der Rundballenpresse (1) zugeführt, die von einem umlaufend angetriebenen, als Endlosriemen ausgeführten Pressriemen (8) räumlich begrenzt ist;
b) Innerhalb der Presskammer (12) wird das Erntegut sukzessive zu einem Rundballen (2) gepresst, wobei mit zunehmender Menge an zugeführtem Erntegut eine Laufstrecke des Pressriemens (8) verändert und hierdurch ein Durchmesser der Presskammer (12) sukzessive vergrößert wird;
c) Im Zuge eines Pressvorgangs wird eine Spannung des Pressriemens (8) mittels einer Riemenspanneinrichtung (9) beeinflusst, wobei die Riemenspanneinrichtung (9) einen Unterspannarm (14) und einen Oberspannarm (15) umfasst, wobei der Unterspannarm (14) den Pressriemen (8) mittels mindestens einer Spannrolle (10, 11) die Presskammer (12) begrenzend führt und der Oberspannarm (15) mittels mindestens einer anderen Spannrolle (16) mit dem Pressriemen (8) zusammenwirkt, wobei zumindest der Unterspannarm (14) bewegt und dadurch die Laufstrecke des Pressriemens (8) verändert werden;
**dadurch gekennzeichnet, dass**
mittels einer Messeinrichtung (6) eine Ist-Spannung des Pressriemens (8) während eines jeweiligen Pressvorgangs fortwährend bestimmt und mit einer Soll-Spannung verglichen wird,
wobei die Riemenspanneinrichtung (9) derart betrieben wird, dass die Ist-Spannung des Pressriemens (8) in Richtung der Soll-Spannung verändert wird.

2. Verfahren nach Anspruch 1, **dadurch gekennzeichnet, dass** der Unterspannarm (14) und/oder der Oberspannarm (15) jeweils im Zuge eines Pressvorgangs grundsätzlich gemäß einer gemeinsamen vorgegebenen Bewegungsfunktion oder jeweils eigener vorgegebener Bewegungsfunktionen relativ zu dem Gehäuse (3) bewegt werden.

3. Verfahren nach Anspruch 2, **dadurch gekennzeichnet, dass** der Oberspannarm (15) derart abweichend von der ihm zugeordneten Bewegungsfunktion positioniert wird, dass die Ist-Spannung des Pressriemens (8) in Richtung der Soll-Spannung verändert wird.

4. Verfahren nach Anspruch 3, **dadurch gekennzeichnet, dass** für den Fall, dass die Ist-Spannung kleiner ist als die Soll-Spannung, der Oberspannarm (15) zumindest für einen Spannungszeitraum in seiner aktuellen Position gehalten wird.

5. Verfahren nach Anspruch 3 oder 4, **dadurch gekennzeichnet, dass** für den Fall, dass die Ist-Spannung gleich oder größer ist als die Soll-Spannung, der Oberspannarm (15) zumindest für einen Freigabezeitraum freigegeben oder zumindest für ein Zeitinkrement in seiner aktuellen Position gehalten wird.

6. Verfahren nach Anspruch 5, **dadurch gekennzeichnet, dass** der Oberspannarm (15) freigegeben wird, wenn ein Schwenkwinkel (26) des Oberspannarms (15) relativ zu dem Gehäuse (3) einem theoretischen Schwenkwinkel des Oberspannarms (15) entspricht oder diesen übersteigt, wobei der theoretische Schwenkwinkel vorgegeben ist.

7. Verfahren nach einem der vorhergehenden Ansprüche, **dadurch gekennzeichnet, dass** die Soll-Spannung des Pressriemens (8) über einen Pressvorgang eines Rundballens (2) hinweg verändert wird.

8. Verfahren nach Anspruch 7, **dadurch gekennzeichnet, dass** die Soll-Spannung eine Funktion des Durchmessers der Presskammer (12) und/oder einer Kontaktstrecke (13) des Pressriemens (8) ist, über die hinweg sich der Pressriemen (8) in Kontakt mit dem Erntegut befindet.

9. Verfahren nach einem der vorhergehenden Ansprüche, **dadurch gekennzeichnet, dass** eine Lagerkraft einer an dem Gehäuse (3) gelagerten Laufrolle (7) , die mit dem Pressriemen (8) zusammenwirkt, erfasst wird, wobei die Ist-Spannung des Pressriemens (8) unter Einbeziehung der Lagerkraft bestimmt wird.

10. Verfahren nach Anspruch 9, **dadurch gekennzeichnet, dass** anhand der erfassten Lagerkraft sowie in Abhängigkeit einer Auslenkung des Unterspannarms (14) und eines daraus resultierenden Umgreifungswinkels (17), um den der Pressriemen (8) die Laufrolle (7) umgreift, eine resultierende Lagerkraft bestimmt wird.

11. Verfahren nach Anspruch 10, **dadurch gekennzeichnet, dass** anhand der resultierenden Lagerkraft eine in dem Pressriemen (8) wirkende Riemenkraft ermittelt wird, unter deren Heranziehung die Ist-Spannung des Pressriemens (8) bestimmt wird.

12. Landwirtschaftliche Rundballenpresse (1) zum Pressen halmartigen Ernteguts zu Rundballen (2), umfassend
- einen als Endlosriemen ausgebildeten Pressriemen (8), der derart mit einer Mehrzahl von Führungsrollen (7) zusammenwirkt, dass er in einem Betriebszustand der Rundballenpresse (1) entlang einer Laufstrecke endlos umlaufen kann,
- eine von dem Pressriemen (8) begrenzte Presskammer (12),
- eine Riemenspanneinrichtung (9), die einen Unterspannarm (14) und einen Oberspannarm (15) umfasst, ,
wobei die Presskammer (12) einen variablen Durchmesser aufweist,
wobei der Unterspannarm (14) zwei Spannrollen (10, 11) und der Oberspannarm (15) eine Spannrolle (16) umfassen,
wobei die Spannrollen (10, 11, 16) jeweils mit dem Pressriemen (8) zusammenwirken,
wobei der Unterspannarm (14) und der Oberspannarm (15) derart bewegbar ausgebildet sind, dass die Laufstrecke des Pressriemens (8) veränderbar und der Pressriemen (8) im Zuge eines Pressvorgangs auf Spannung haltbar ist,
**gekennzeichnet durch**
eine Messeinrichtung (6), mittels der eine Ist-Spannung des Pressriemens (8) während eines jeweiligen Pressvorgangs fortwährend bestimmbar ist, sowie
eine Steuereinrichtung (18), die dazu eingerichtet ist, die Riemenspanneinrichtung (9) in Abhängigkeit der bestimmten Ist-Spannung derart anzusteuern, dass die Ist-Spannung in Richtung einer vorgegebenen Soll-Spannung des Pressriemens (8) verändert wird.

13. Rundballenpresse (1) nach Anspruch 12, **dadurch gekennzeichnet, dass** die Messeinrichtung (6) mit einer Laufrolle (7) zusammenwirkt, die fest an einem Gehäuse (3) der Rundballenpresse (1) angeordnet ist und die mit dem Pressriemen (8) zusammenwirkt, wobei vorzugsweise mittels der Messeinrichtung (6) eine Lagerkraft erfassbar ist, mit der sich die Laufrolle (7) an dem Gehäuse (3) abstützt.

14. Rundballenpresse (1) nach einem der vorhergehenden Ansprüche, **dadurch gekennzeichnet, dass** der Unterspannarm (14) mit einem Spannelement (21) zusammenwirkt, mittels dessen die mindestens eine Spannrolle (10, 11) des Unterspannarms (14) gegen den Pressriemen (8) spannbar ist, wobei vorzugsweise das Spannelement (21) von einem Hydraulikzylinder gebildet ist.

15. Rundballenpresse (1) nach einem der vorhergehenden Ansprüche, **dadurch gekennzeichnet, dass** der Oberspannarm (15) mit einem Spannelement (22) zusammenwirkt, mittels dessen die Spannrolle (16) des Oberspannarms (16) gegen den Pressriemen (8) spannbar ist, wobei vorzugsweise das Spannelement (21) von einem Hydraulikzylinder gebildet ist.

## Claims

1. A method for operating an agricultural round baler (1), comprising the following method steps:
a) harvested material to be baled is picked up from a substrate and supplied to a bale chamber (12) of the round baler (1) which is disposed in a housing (3) of the round baler (1) and is spatially delimited by a revolvingly driven baler belt (8) configured as a continuous belt;
b) within the bale chamber (12), the crop is compacted step by step into a round bale (2), wherein, as the quantity of harvested material supplied increases, a run path of the baler belt (8) is changed and a diameter of the bale chamber (12) is thereby increased step by step;
c) during the course of a baling procedure, a tension of the baler belt (8) is influenced by means of a belt tensioning device (9), wherein the belt tensioning device (9) comprises a lower tensioning arm (14) and an upper tensioning arm (15), wherein the lower tensioning arm (14) guides the baler belt (8) in a manner which delimits the bale chamber (12) by means of at least one tensioning roller (10, 11) and the upper tensioning arm (15) cooperates with the baler belt (8) by means of at least one other tensioning roller (16), wherein at least the lower tensioning arm (14) is moved and the run path of the baler belt (8) is changed thereby;
**characterized in that**
by means of a measuring device (6), the actual tension of the baler belt (8) is continuously determined during a respective baling procedure and compared with a target tension,
wherein the belt tensioning device (9) is operated in a manner such that the actual tension of the baler belt (8) is changed in the direction of the target tension.

2. The method according to claim 1, **characterized in that** the lower tensioning arm (14) and/or the upper tensioning arm (15) are respectively moved relative to the housing (3) during the course of a baling procedure, in principle in accordance with a shared specified movement function or with their own respective specified movement functions.

3. The method according to claim 2, **characterized in that** the upper tensioning arm (15) is positioned to deviate from its assigned movement function in a manner such that the actual tension of the baler belt (8) is changed in the direction of the target tension.

4. The method according to claim 3, **characterized in that**, in the case in which the actual tension is smaller than the target tension, the upper tensioning arm (15) is held in its current position for at least a tensioning period.

5. The method according to claim 3 or claim 4, **characterized in that**, in the case in which the actual tension is equal to or greater than the target tension, the upper tensioning arm (15) is released for at least a release period or is held in its current position for at least a time increment.

6. The method according to claim 5, **characterized in that** the upper tensioning arm (15) is released when a pivot angle (26) of the upper tensioning arm (15) relative to the housing (3) corresponds to or exceeds a theoretical pivot angle of the upper tensioning arm (15), wherein the theoretical pivot angle is specified.

7. The method according to one of the preceding claims, **characterized in that** the target tension of the baler belt (8) is changed over a round bale (2) baling procedure.

8. The method according to claim 7, **characterized in that** the target tension is a function of the diameter of the bale chamber (12) and/or of a contact section (13) of the baler belt (8) over which the baler belt (8) is in contact with the harvested material.

9. The method according to one of the preceding claims, **characterized in that** a bearing force of a roller (7) mounted on the housing (3), the roller cooperating with the baler belt (8), is detected, wherein the actual tension of the baler belt (8) is determined taking the bearing force into account.

10. The method according to claim 9, **characterized in that** a resulting bearing force is determined on the basis of the detected bearing force and also as a function of a deflection of the lower tensioning arm (14) and of a resulting encompassing angle (17), by which the baler belt (8) encompasses the roller (7).

11. The method according to claim 10, **characterized in that** a belt force acting in the baler belt (8) is determined with the aid of the resulting bearing force, and the actual tension of the baler belt (8) is determined using this belt force.

12. An agricultural round baler (1) for compacting stalked harvested material into round bales (2), comprising
- a baler belt (8) constructed as a continuous belt, which cooperates with a plurality of guide rollers (7) in a manner such that, in an operating state of the round baler (1), it can revolve continuously along a run path,
- a bale chamber (12) delimited by the baler belt (8),
- a belt tensioning device (9) comprising a lower tensioning arm (14) and an upper tensioning arm (15),
wherein the bale chamber (12) has a variable diameter, wherein the lower tensioning arm (14) comprises two tensioning rollers (10, 11) and the upper tensioning arm (15) comprises one tensioning roller (16),
wherein the tensioning rollers (10, 11, 16) respectively cooperate with the baler belt (8),
wherein the lower tensioning arm (14) and the upper tensioning arm (15) are constructed to be movable in a manner such that the run path of the baler belt (8) can be changed and the baler belt (8) can be kept under tension during the course of a baling procedure,
**characterized by**
a measuring device (6), by means of which an actual tension of the baler belt (8) can be continuously determined during a respective baling procedure, as well as
a control device (18), which is configured to control the belt tensioning device (9) as a function of the determined actual tension in a manner such that the actual tension is changed in the direction of a specified target tension of the baler belt (8).

13. The round baler (1) according to claim 12, **characterized in that** the measuring device (6) cooperates with a roller (7) which is securely disposed on a housing (3) of the round baler (1) and which cooperates with the baler belt (8), wherein preferably, a bearing force with which the roller (7) bears on the housing (3) can be detected by means of the measuring device (6).

14. The round baler (1) according to one of the preceding claims, **characterized in that** the lower tensioning arm (14) cooperates with a tensioning element (21), by means of which the at least one tensioning roller (10, 11) of the lower tensioning arm (14) can be tightened against the baler belt (8), wherein preferably, the tensioning element (21) is formed by a hydraulic cylinder.

15. The round baler (1) according to one of the preceding claims, **characterized in that** the upper tensioning arm (15) cooperates with a tensioning element (22), by means of which the tensioning roller (16) of the upper tensioning arm (16) can be tightened against the baler belt (8), wherein preferably, the tensioning element (21) is formed by a hydraulic cylinder.

## Revendications

1. Procédé permettant de faire fonctionner une presse à balles rondes (1) agricole, comprenant les étapes de procédé suivantes :
a) la récolte à presser est ramassée sur un terrain et amenée à une chambre de pressage (12) de la presse à balles rondes (1) qui est disposée dans un carter (3) de la presse à balles rondes (1) et est délimitée dans l'espace par une courroie de pressage (8) entraînée en circulation et réalisée sous forme de courroie sans fin ;
b) à l'intérieur de la chambre de pressage (12), la récolte est pressée successivement pour former une balle ronde (2), sachant qu'à mesure que la quantité de récolte amenée augmente, un trajet de déplacement de la courroie de pressage (8) est modifié et ainsi un diamètre de la chambre de pressage (12) est augmenté de manière successive ;
c) dans le cadre d'une opération de pressage, une tension de la courroie de pressage (8) est influencée au moyen d'un dispositif tendeur de courroie (9), le dispositif tendeur de courroie (9) comprenant un bras tendeur inférieur (14) et un bras tendeur supérieur (15), le bras tendeur inférieur (14) guidant la courroie de pressage (8) à l'aide d'au moins une poulie de tension (10, 11) en délimitant la chambre de pressage (12), et le bras tendeur supérieur (15) coopérant avec la courroie de pressage (8) à l'aide d'au moins une autre poulie de tension (16), sachant qu'au moins le bras tendeur inférieur (14) est déplacé et de ce fait le trajet de déplacement de la courroie de pressage (8) est modifié,
**caractérisé en ce que**
une tension réelle de la courroie de pressage (8) est déterminée en continu au moyen d'un dispositif de mesure (6), au cours d'une opération de pressage respective, et est comparée avec une tension de consigne,
le dispositif tendeur de courroie (9) étant entraîné de manière à ce que la tension réelle de la courroie de pressage (8) soit modifiée en direction de la tension de consigne.

2. Procédé selon la revendication 1, **caractérisé en ce que** le bras tendeur inférieur (14) et/ou le bras tendeur supérieur (15) sont déplacés chacun par rapport au carter (3) dans le cadre d'une opération de pressage, fondamentalement selon une fonction de mouvement prédéterminée commune ou chacun selon leurs fonctions de mouvement propres prédéterminées.

3. Procédé selon la revendication 2, **caractérisé en ce que** le bras tendeur supérieur (15) est positionné par rapport à la fonction de mouvement qui lui est associée, avec un écart tel que la tension réelle de la courroie de pressage (8) soit modifiée en direction de la tension de consigne.

4. Procédé selon la revendication 3, **caractérisé en ce que**, dans le cas où la tension réelle est inférieure à la tension de consigne, le bras tendeur supérieur (15) est maintenu dans sa position actuelle au moins pendant une durée de serrage.

5. Procédé selon la revendication 3 ou 4, **caractérisé en ce que**, dans le cas où la tension réelle est égale ou supérieure à la tension de consigne, le bras tendeur supérieur (15) est libéré au moins pendant une durée de libération ou est maintenu dans sa position actuelle au moins pendant un incrément de temps.

6. Procédé selon la revendication 5, **caractérisé en ce que** le bras tendeur supérieur (15) est libéré lorsqu'un angle de pivotement (26) du bras tendeur supérieur (15) par rapport au carter (3) correspond à un angle de pivotement théorique du bras tendeur supérieur (15) ou est supérieur à celui-ci, l'angle de pivotement théorique étant prédéfinie.

7. Procédé selon une des revendications précédentes, **caractérisé en ce que** la tension de consigne de la courroie de pressage (8) est modifiée au cours d'une opération de pressage d'une balle ronde (2).

8. Procédé selon la revendication 7, **caractérisé en ce que** la tension de consigne est une fonction du diamètre de la chambre de pressage (12) et/ou d'une portion de contact (13) de la courroie de pressage (8), dans laquelle la courroie de pressage (8) est en contact avec la récolte.

9. Procédé selon une des revendications précédentes, **caractérisé en ce que** l'on mesure une force d'appui d'un galet (7) qui est monté sur le carter (3) et coopère avec la courroie de pressage (8), la tension réelle de la courroie de pressage (8) étant déterminée en tenant compte de la force d'appui.

10. Procédé selon la revendication 9, **caractérisé en ce qu'**une force d'appui résultante est déterminée à l'aide de la force d'appui mesurée ainsi qu'en fonction d'une déviation du bras tendeur inférieur (14) et d'un angle d'enroulement (17) qui en résulte et avec lequel la courroie de pressage (8) entoure le galet (7).

11. Procédé selon la revendication 10, **caractérisé en ce que** l'on détermine, à l'aide de la force d'appui résultante, une force de courroie qui agit dans la courroie de pressage (8) et à l'aide de laquelle on détermine la tension réelle de la courroie de pressage (8).

12. Presse à balles rondes (1) agricole destinée à presser des produits récoltés en forme de tiges, en vue d'obtenir des balles rondes (2), comprenant
- une courroie de pressage (8) qui est réalisée sous forme de courroie sans fin et qui coopère avec une pluralité de galets de guidage (7), de manière à ce que, dans un état de fonctionnement de la presse à balles rondes (1), elle puisse circuler sans fin le long d'un trajet de déplacement,
- une chambre de pressage (12) délimitée par la courroie de pressage (8),
- un dispositif tendeur de courroie (9) qui comporte un bras tendeur inférieur (14) et un bras tendeur supérieur (15),
la chambre de pressage (12) présentant un diamètre variable,
le bras tendeur inférieur (14) comportant deux poulies de tension (10, 11), et le bras tendeur supérieur (15) comportant une poulie de tension (16),
les poulies de tension (10, 11, 16) coopérant chacune avec la courroie de pressage (8),
le bras tendeur inférieur (14) et le bras tendeur supérieur (15) étant réalisés de façon déplaçable, de manière à ce que le trajet de déplacement de la courroie de pressage (8) puisse être modifié et la courroie de pressage (8) puisse être maintenue sous tension au cours d'une opération de pressage,
**caractérisée en ce qu'**elle comprend
un dispositif de mesure (6) au moyen duquel une tension réelle de la courroie de pressage (8) peut être déterminée en continu pendant une opération de pressage respective, ainsi qu'un
dispositif de commande (18) qui est conçu pour activer le dispositif tendeur de courroie (9) en fonction de la tension réelle déterminée, de manière à ce que la tension réelle soit modifiée en direction d'une tension de consigne prédéfinie de la courroie de pressage (8).

13. Presse à balles rondes (1) selon la revendication 12, **caractérisée en ce que** le dispositif de mesure (6) coopère avec un galet (7) qui est disposé de manière fixe sur un carter (3) de la presse à balles rondes (1) et qui coopère avec la courroie de pressage (8), le dispositif de mesure (6) permettant de préférence de mesurer une force d'appui avec laquelle le galet (7) prend appui sur le carter (3).

14. Presse à balles rondes (1) selon une des revendications précédentes, **caractérisée en ce que** le bras tendeur inférieur (14) coopère avec un élément tendeur (21) au moyen duquel la poulie de tension (10, 11), au nombre d'au moins une, du bras tendeur inférieur (14) peut être serrée contre la courroie de pressage (8), l'élément tendeur (21) étant de préférence constitué d'un vérin hydraulique.

15. Presse à balles rondes (1) selon une des revendications précédentes, **caractérisée en ce que** le bras tendeur supérieur (15) coopère avec un élément tendeur (22) au moyen duquel la poulie de tension (16) du bras tendeur supérieur (16) peut être serrée contre la courroie de pressage (8), l'élément tendeur (21) étant de préférence constitué d'un vérin hydraulique.
